(19)

Europäisches
Patentamt

European
Patent Office

Office européen
des brevets

(11)  **EP 2 595 225 B1**

(12)     **EUROPEAN PATENT SPECIFICATION**

(45) Date of publication and mention
of the grant of the patent:
**12.06.2019   Bulletin 2019/24**

(21) Application number: **11806580.4**

(22) Date of filing: **13.06.2011**

(51) Int Cl.:
***H01M 4/90*** *(2006.01)*      ***H01M 4/88*** *(2006.01)*
***H01M 8/1018*** *(2016.01)*

(86) International application number:
**PCT/JP2011/063451**

(87) International publication number:
**WO 2012/008249 (19.01.2012 Gazette 2012/03)**

(54) **METHOD FOR PRODUCING FUEL CELL CATALYST, FUEL CELL CATALYST, AND USES THEREOF**

VERFAHREN ZUR HERSTELLUNG EINES BRENNSTOFFZELLENKATALYSATORS,
BRENNSTOFFZELLENKATALYSATOR UND VERWENDUNG DAVON

PROCÉDÉ DE PRODUCTION D'UN CATALYSEUR DE PILE À COMBUSTIBLE, CATALYSEUR DE
PILE À COMBUSTIBLE ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.07.2010   JP 2010160638**

(43) Date of publication of application:
**22.05.2013   Bulletin 2013/21**

(73) Proprietor: **Showa Denko K.K.
Tokyo 105-8518 (JP)**

(72) Inventors:
 • **IMAI, Takuya
   Tokyo 105-8518 (JP)**

 • **WAKIZAKA, Yasuaki
   Tokyo 105-8518 (JP)**
 • **OTA, Kenichiro
   Koganei-shi
   Tokyo 184-0015 (JP)**

(74) Representative: **Strehl Schübel-Hopf & Partner
Maximilianstrasse 54
80538 München (DE)**

(56) References cited:
**WO-A1-2009/107518      JP-A- 2009 226 311
JP-A- 2009 231 196      JP-A- 2010 027 364
JP-A- 2010 067 509**

EP 2 595 225 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

TECHNICAL FIELD

The present invention relates to a method for producing a fuel cell catalyst, a fuel cell catalyst, and uses thereof; and particularly relates to a method and the like for producing a fuel cell catalyst comprising a metal oxycarbonitride.

BACKGROUND ART

Fuel cells are categorized into various types based on the types of electrolyte and the types of electrode used therein. Typical types are alkaline, phosphoric acid, molten carbonate, solid electrolyte, and polymer electrolyte fuel cells. In particular, polymer electrolyte fuel cells that can operate at temperatures ranging from low temperatures (about -40°C) to about 120°C have attracted attention and, in recent years, are being progressively developed and practically used as low pollution power sources for automobiles. The polymer electrolyte fuel cells are expected to be used as automobile drive sources or stationary power sources. However, use in these applications requires long-term durability.

Polymer electrolyte fuel cells have a solid polymer electrolyte sandwiched between an anode and a cathode. A fuel is fed to the anode, and oxygen or air is fed to the cathode, whereby oxygen is reduced at the cathode to produce electricity. The fuel is primarily hydrogen, methanol, or the like.

To increase the reaction rate in the fuel cell and enhance the energy conversion efficiency of the fuel cell, a layer containing a catalyst (hereinafter, also referred to as a "fuel cell catalyst layer") is conventionally provided on the surface of a cathode (an air electrode) or the surface of an anode (a fuel electrode) of the fuel cell.

Here, noble metals are generally used as the catalysts. Of the noble metals, platinum that is stable at high potential and has high catalytic activity is most frequently used. However, platinum is expensive and exists in a limited amount.

Therefore, in recent years, research into the development of an alternative catalyst to platinum has been actively conducted. The present applicant has, in fact, proposed a catalyst comprising a niobium or titanium oxycarbonitride (e.g. see WO2009/031383 (Patent Literature 1) and WO2009/107518 (Patent Literature 2)) .

CITATION LIST

Patent Literatures

Patent Literature 1: WO2009/031383
Patent Literature 2: WO2009/107518

SUMMARY OF INVENTION

Problem to be Solved by the Invention

Practical use of fuel cell catalysts requires high initial characteristics and the capacity to maintain stable catalytic activity over an extended period of time, that is, durability.

The fuel cell catalyst recited in Patent Literature 1 or Patent Literature 2 (present applicant) expresses extremely high catalytic activity compared to conventional platinum alternate catalysts and, from this perspective, is better suited for practical use. However, there is a need for further improvement with regards to the maintenance of durability.

The present inventors studied diligently to solve the conventional problems in the art and, as a result of diligent research, have discovered a method for producing a catalyst whereby durability can be maintained by subjecting the catalyst to a simple treatment. The present invention has been completed based on this finding.

That is, an object of the present invention is to provide a method for producing a fuel cell catalyst comprising a metal oxycarbonitride having durability that is superior to that of conventional fuel cell catalysts.

Solution to Problem

The present invention relates to, for example, the following [1] to [11].

[1] A method for producing a fuel cell catalyst containing a metal oxycarbonitride, the method comprising: a step of producing a metal oxycarbonitride by heating a metal carbonitride in an inert gas containing oxygen gas; and

a step of bringing the metal oxycarbonitride into contact with an acidic solution.

[2] The method as described in [1] above, wherein the acidic solution is an aqueous solution of at least one type of acid selected from the group consisting of hydrogen chloride, sulfuric acid, citric acid, and acetic acid.

[3] The method as described in [1] or [2] above, wherein the contacting step is performed under the following conditions: Temperature: 15 to 100°C

Time: 0.1 to 500 hours

Acid concentration: 0.01 to 15 N.

[4] A fuel cell catalyst produced via the production method as described in any one of [1] to [3] above, wherein the metal oxycarbonitride at least comprises niobium or titanium.

[5] The fuel cell catalyst as described in [4] above, having not more than 15 % by mass of dissolved metal content as defined by the following formula:

$$\text{Dissolved metal content= (mass of metal dissolved when immersing the fuel cell catalyst in a 1N sulfuric acid aqueous solution at 60°C for 150 hours)/(mass of fuel cell catalyst before immersing)} \times 100.$$

[6] A fuel cell catalyst layer comprising the fuel cell catalyst as described in [4] or [5] above.

[7] The fuel cell catalyst layer as described in [6] above, further comprising electron conductive particles.

[8] An electrode comprising a fuel cell catalyst layer and a porous support layer, wherein the fuel cell catalyst layer is a fuel cell catalyst layer as described in [6] or [7] above.

[9] A membrane electrode assembly comprising a cathode, an anode and an electrolyte membrane interposed between the cathode and the anode, wherein the cathode and/or the anode is the electrode as described in [8] above.

[10] A fuel cell comprising the membrane electrode assembly as described in [9] above.

[11] A polymer electrolyte fuel cell comprising the membrane electrode assembly as described in [9] above.

ADVANTAGEOUS EFFECTS OF INVENTION

According to the present invention, a fuel cell catalyst containing a metal oxycarbonitride that has durability superior to that of conventional fuel cell catalysts, and a fuel cell using said catalyst can be provided. More specifically, a fuel cell catalyst comprising a metal oxycarbonitride and a fuel cell using said catalyst can be provided in which maximum power density is not prone to decline even after going through repeated changes in current and/or voltage.

BRIEF DESCRIPTION OF THE DRAWINGS

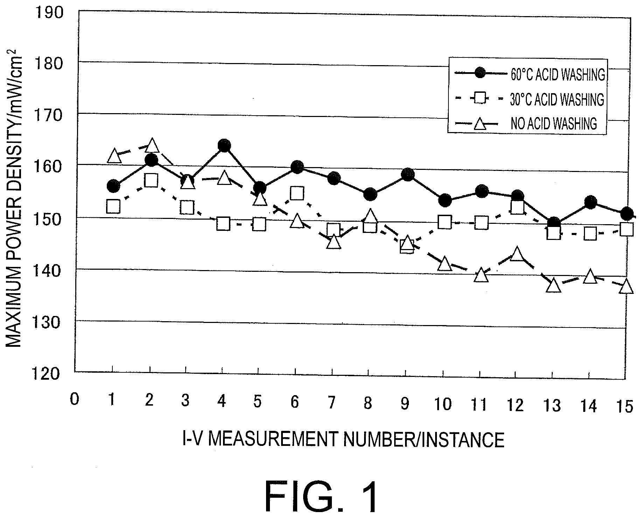

FIG. 1 is a graph showing evaluations of durability of single cells of polymer electrolyte fuel cells in Examples 1 and 2 and Comparative Example 1. (Results of evaluating the durability of iron and niobium oxycarbonitrides)

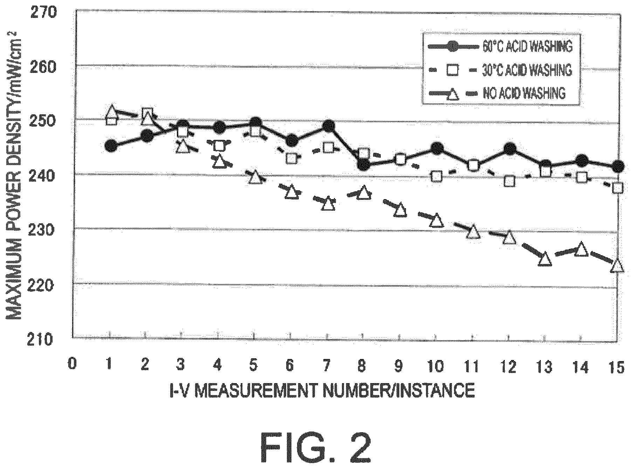

FIG. 2 is a graph showing evaluations of durability of single cells of polymer electrolyte fuel cells in Examples 3 and 4 and Comparative Example 2. (Results of evaluating the durability of titanium and lanthanum oxycarbonitrides)

DESCRIPTION OF EMBODIMENTS

A method for producing a fuel cell catalyst containing a metal oxycarbonitride according to the present invention includes:

a step of producing a metal oxycarbonitride by heating a metal carbonitride in an inert gas containing oxygen gas; and
a step of bringing the metal oxycarbonitride into contact with an acidic solution.

Step of Producing the Metal Oxycarbonitride

In the step of producing the metal oxycarbonitride, the metal oxycarbonitride is produced by heating a metal carbonitride in an inert gas containing oxygen gas.

A conventional method can be used as the method for producing the metal oxycarbonitride by heating a metal carbonitride in an inert gas containing oxygen gas. Examples thereof include a method for producing a niobium oxycarbonitride by heat treating niobium carbonitride in an inert gas containing oxygen gas (see WO2009/031383) and a method for producing a titanium oxycarbonitride by heat treating titanium carbonitride in an inert gas containing oxygen gas (see WO2009/107518) . Note that in these methods, the inert gas containing oxygen gas also contains hydrogen gas, but in the present invention, the inert gas may not contain hydrogen gas.

Additionally, in these production methods, oxycarbonitrides of other metal elements may be produced by using carbonitrides of other metals (e.g. iron, lanthanum, and the like) together with or in place of the niobium carbonitride or the titanium carbonitride.

In the present invention, when the metal element is represented as "M", "metal oxycarbonitride", when the composition formula is $MC_xN_yO_z$, refers to a compound expressed by composition formula $MC_xN_yO_z$ and/or a mixture comprising a metal oxide, a metal carbide, a metal nitride, a metal carbonitride, a metal oxycarbide, or a metal oxynitride that is expressed by the composition formula $MC_xN_yO_z$ as a whole. However, in the case of the latter, the mixture may or may not comprise a compound expressed by $MC_xN_yO_z$.

In the step of producing the metal oxycarbonitride, the metal oxycarbonitride is often obtained in the form of a sintered body.

The method for producing a fuel cell catalyst according to the present invention preferably comprises a step of crushing the sintered body prior to the contacting step. If this step is included, catalyst area of the produced fuel cell catalyst will increase and the catalytic performance thereof will be superior.

A conventional method can be used as the method for crushing the metal oxycarbonitride obtained in the step of producing the metal oxycarbonitride. Examples thereof include a method recited in WO2009/031383.

Contacting Step

In the contacting step, the metal oxycarbonitride is brought into contact with an acidic solution.

As described above, the metal oxycarbonitride is preferably obtained by crushing the metal oxycarbonitride obtained in the step of producing the metal oxycarbonitride.

Examples of the acid include hydrogen chloride, sulfuric acid, citric acid, acetic acid, hydrofluoric acid, phosphoric acid, and nitric acid. Of these, hydrogen chloride, sulfuric acid, citric acid, acetic acid, nitric acid, and phosphoric acid are preferable. A single acid may be used, or a combination of two or more acids may be used.

A solvent of the acidic solution is preferably a hydrophilic solvent; more preferably a compound having hydroxyl groups, a compound having ether bonds, or water; even more preferably an alcohol such as methanol, ethanol, propanol, isopropanol, butanol, or the like, a cyclic ether such as THF (tetrahydrofuran) or the like, or water; and yet even more preferably water. A single solvent may be used, or a combination of two or more solvents may be used.

A concentration of the acid in the acidic solution at 25°C is preferably from 0.01 to 15N, more preferably from 0.05 to 10N, and even more preferably from 0.1 to 5N. It is preferable that the concentration of the acid is within this range because the dissolution of the metal component in the fuel cell catalyst will be prone to be uniform.

Additionally, a temperature at the contacting step (hereinafter also referred to as the "contacting temperature") is preferably from 15 to 100°C, more preferably from 20 to 80°C, and even more preferably from 25 to 70°C. It is preferable that the contacting temperature be within this range because the dissolution of the metal component in the fuel cell catalyst will be rapid and the acidic solution will not be prone to evaporation.

A time of the contacting step (hereinafter also referred to as the "contacting time") is preferably from 0.1 to 500 hours, more preferably from 5 to 300 hours, and even more preferably from 12 to 150 hours. It is preferable that the contacting time is within this range because the dissolution of the metal component in the fuel cell catalyst will proceed in a uniform manner.

In the contacting step, for example, the metal oxycarbonitride and the acidic solution are brought into contact with each other by placing both components in a container. The components are preferably stirred at this time.

A ratio of the acidic solution to the metal oxycarbonitride is dependent on the types used thereof but, typically, preferably from 100 to 50,000 mL and more preferably from 1,000 to 10,000 mL of the acidic solution is included per 1 g of the metal oxycarbonitride.

The contacting step is completed when the metal oxycarbonitride is recovered. Examples of methods for recovering the metal oxycarbonitride include conventional techniques such as suction filtration, centrifugation, and the like.

Washing Step

The production method of the present invention preferably comprises a step of washing the metal oxycarbonitride after the contacting step.

By providing the washing step, the eluted metal component, which is a cause of electrolyte membrane deterioration, can be more effectively removed from the metal oxycarbonitride after the contacting step.

The washing step is performed by, for example, bringing a cleansing liquid and the metal oxycarbonitride having gone through the contacting step into contact with each other by placing both components in a container. The components are preferably stirred at this time.

Examples of the cleansing liquid include water and the like.

Drying Step

The production method of the present invention preferably comprises a step of drying the metal oxycarbonitride after the contacting step, and more preferably comprises the drying step after the washing step.

Examples of the form of the drying in the drying step include drying in a vacuum (drying under reduced pressure), drying by heating, and the like.

From the perspective of preventing agglomeration of the fuel cell catalyst, the drying step is preferably performed at a temperature of 100°C or less.

Fuel Cell Catalyst

According to the production method of the present invention, a fuel cell catalyst comprising a metal oxycarbonitride with a low dissolved metal content, specifically a fuel cell catalyst comprising a metal oxycarbonitride having a dissolved metal content that is not more than 15 % by mass, preferably from 0.01 to 15 % by mass, more preferably from 0.05 to 10 % by mass, and even more preferably from 0.1 to 7 % by mass is produced. If the dissolved content is within this range, a fuel cell catalyst with superior durability and a fuel cell using this catalyst can be obtained.

The dissolved metal content as mentioned above is defined by the following formula:

$$\text{Dissolved metal content} = \text{(mass of metal dissolved when immersing the fuel cell catalyst in a 1N sulfuric acid aqueous solution at 60°C for 150 hours)} / \text{(mass of fuel cell catalyst before immersing)} \times 100.$$

The "mass of metal dissolved" in the formula above is a mass that is measured according to a method used in the Examples described below.

The fuel cell catalyst according to the present invention is a catalyst that is produced through the production method according to the present invention as described above.

The fuel cell catalyst is preferably a powder because catalytic performance will be high.

The fuel cell catalyst can be used as an alternate to a platinum catalyst.

Uses

A fuel cell catalyst layer according to the present invention comprises the fuel cell catalyst described above.

The fuel cell catalyst layer preferably further comprises electron conductive powder. When the fuel cell catalyst layer comprising the catalyst further comprises the electron conductive powder, the reduction current can be further increased. It is thought that the electron conductive powder can increase the reduction current because said electron conductive powder allows the catalyst to form an electrical bond that induces an electrochemical reaction.

The electron conductive particles are usually used as a carrier of the catalyst.

The fuel cell catalyst layer may be used as an anode catalyst layer or a cathode catalyst layer. The fuel cell catalyst layer contains the catalyst that has high oxygen reducing activity and is resistant to corrosion in acidic electrolytes even at high potential. Accordingly, the fuel cell catalyst layer is suited for use as a catalyst layer provided in a cathode of a fuel cell (as a cathode catalyst layer), and is particularly suited for use as a catalyst layer provided on a cathode of a membrane electrode assembly included in a polymer electrolyte fuel cell.

An electrode according to the present invention comprises the fuel cell catalyst layer and a porous support layer.

The electrode may be used as a cathode or an anode. The electrode has superior durability and high catalytic performance and, therefore, exhibits greater benefits when used as a cathode.

The membrane electrode assembly according to the present invention comprises a cathode, an anode and an electrolyte membrane interposed between the cathode and the anode. The cathode and/or the anode is the electrode according to the present invention.

Typically, the electrolyte membrane is a perfluorosulfonic acid electrolyte membrane, a hydrocarbon electrolyte membrane, or the like. However, a polymer microporous membrane impregnated with a liquid electrolyte, a porous membrane filled with a polymer electrolyte, or the like may also be used.

The fuel cell according to the present invention comprises the membrane electrode assembly as described above.

The electrode reaction in fuel cells takes place at a so-called three-phase interface (electrolyte-electrocatalyst-reaction gas). The fuel cells are categorized according to the electrolytes and the like used therein into several types such as molten carbonate fuel cells (MCFC), phosphoric acid fuel cells (PAFC), solid oxide fuel cells (SOFC), and polymer electrolyte fuel cells (PEFC). Polymer electrolyte fuel cells are preferable as the fuel cell according to the present invention.

Examples

Hereinafter, the present invention is described in detail based on Examples, but the present invention shall not be construed to be limited in any way by these Examples.

Evaluation Method

Measurement of the dissolved metal content:

The dissolved metal content as defined below of each fuel cell catalyst manufactured according to the Examples and the Comparative Examples was measured.

```
Dissolved metal content= (mass of metal dissolved when immersing the fuel cell catalyst in a 1N sulfuric acid aqueous solution at 60°C for 150 hours)/(mass of fuel cell catalyst before

immersing)×100
```

The mass of metal dissolved was measured via ICP-atomic emission spectrometry after immersing the fuel cell catalyst, removing 10 mL of the sulfuric acid aqueous solution supernatent and, thereafter filtering using a 0.2 $\mu$m filter.

The measurement apparatus was a VISTA-PRO (manufactured by SII), and the same was used to detect the following wavelengths. Fe: 259.088 nm, Nb: 295.088 nm, La: 379.477 nm, and Ti: 334.941 nm.

Evaluation of power generation property (measurement of catalytic performance)

Temperatures of the single cells fabricated in the Examples and Comparative Examples, anode humidifiers, and cathode humidifiers were regulated to 90°C, 95°C, and 65°C, respectively. Hydrogen was supplied to the anode side as a fuel at a flow rate of 1 L/min, and oxygen was supplied to the cathode side as an oxidizing agent at a flow rate of 2 L/min. While applying a back pressure of 300 kPa to both the sides, the current-voltage property of the single cells was measured, and the maximum power density was calculated from the resulting current-voltage property curve.

Smaller declines in the maximum power density when repeating this measurement indicate greater durability.

The slope of an approximation curve was calculated by repeating this measurement 15 times and using a least-squares method. Specifically, a slope a when the maximum power density y (mW/cm$^2$) of the x$^{th}$ measurement was expressed by the approximation formula y=ax+b was calculated using the least-squares method. It is thought that a more gradual slope indicates a smaller decline in the maximum power density and greater durability. Therefore, the durability of the catalyst was determined based on this slope.

Example 1

1. Preparation of the fuel cell catalyst:

5.88 g (56 mmol) of carbonized niobium (NbC, manufactured by Soekawa Chemical Co., Ltd.), 0.87 g (5 mmol) of ferric acetate (Fe($CH_3CO_2$)$_2$, manufactured by ALDRICH), and 5.14 g (48 mmol) of nitrified niobium (NbN, manufactured by Kojundo Chemical Laboratory Co., Ltd.) were thoroughly mixed. The resultant mixed powder was heated in a tubular furnace under a nitrogen atmosphere at 1, 600°C for three hours. Thereby, 10.89 g of an iron and niobium carbonitride (1) was obtained. The obtained carbonitride (1) was a sintered body and, thus, was ground using a mortar.

1.18 g of an iron and niobium oxycarbonitride (1) was obtained by heating 1.05 g of the obtained powdered carbonitride (1) in a rotary kiln at 900°C for seven hours under a flow of a nitrogen gas comprising 0.75% by volume of oxygen gas and 4% by volume of hydrogen gas.

The iron and niobium oxycarbonitride (1) was milled using a planetary ball mill (Premium 7, manufactured by Fritsch; rotating radius: 2.3 cm, orbital radius: 16.3 cm) as described below.

0.9 g of the iron and niobium oxycarbonitride (1), 40 g of zirconia balls having a diameter of 0.5 mm (manufactured by Nikkato Corporation), and 7 mL of acetonitrile (dispersion solvent) were introduced into a sealable zirconia mill container (volume: 45 mL, inner diameter: 45 mm). The zirconia mill container was sealed and sufficiently purged with argon.

Next, the iron and niobium oxycarbonitride (1) was pulverized under the following conditions: rotation/revolution speed: 700 rpm, orbital revolution speed: 350 rpm, rotating centrifugal acceleration: 12.6 G, orbital centrifugal acceleration: 22.3 G, pulverizing time: 5 minutes. Thereby a fuel cell catalyst (1) was obtained.

After the pulverizing, the fuel cell catalyst (1) was water-cooled in the zirconia mill container. After the water-cooling, the zirconia balls were separated from the acetonitrile and the fuel cell catalyst (1). Furthermore, the acetonitrile was removed from the acetonitrile and the fuel cell catalyst (1) using a rotary evaporator so as to isolate the fuel cell catalyst (1).

Thereafter, 0.35 g of the fuel cell catalyst (1) was added to 350 mL of 1N sulfuric acid and was agitated for 144 hours while maintaining the temperature of the solution at 30°C. Then, a fuel cell catalyst (2) was obtained by filtrating/separating by suction filtration, washing using distilled water and, thereafter, drying under vacuum for three hours at 60°C.

Dissolved metal content of the fuel cell catalyst (2) is shown in Table 1.

2. Fabrication of single cell of the polymer electrolyte fuel cell

2-1. Fabrication of electrode having anode catalyst layer Preparation of anode ink

0.6 g of platinum-supporting carbon (TEC10E60E, manufactured by Tanaka Kikinzoku Kogyo K.K.) and 5 g of an aqueous solution containing 0.25 g of a proton conductive material (NAFION®, available from Wako Pure Chemical Industries, Ltd. or, rather, 5% NAFION® aqueous solution) were added to 50 ml of pure water. The resultant solution was mixed using an ultrasonic wave dispersion machine (UT-106H, manufactured by Sharp Manufacturing Systems Corporation) for one hour. Thereby, an anode ink (1) was prepared.

Fabrication of electrode having anode catalyst layer

A gas diffusion layer (carbon paper TGP-H-060, manufactured by Toray Industries Inc.) was immersed in acetone for 30 seconds, degreased, and dried. Then, the gas diffusion layer was immersed in an aqueous 10% polytetrafluoroethylene (hereinafter also referred to as "PTFE") solution for 30 seconds. The immersed product was dried at room temperature, and then was heated at 350 °C for one hour. Thereby, a water-repellent gas diffusion layer having PTFE dispersed in the carbon paper (hereinafter also referred to as "GDL") was obtained.

Next, the GDL described above was formed into the size of 5 cm × 5 cm, and the surface thereof was coated with the anode ink (1) prepared in 1 above using an automatic spray-coating apparatus (manufactured by San-Ei Tech Ltd.) at 80°C. By repeating the spray-coating, an electrode having an anode catalyst layer (1) in which the amount of platinum (Pt) per unit area was 1 mg/cm$^2$ was fabricated.

2-2. Preparation of ink

0.284 g of the fuel cell catalyst (2) prepared in 1 above, and 0.071 g of carbon black as an electron conductive material (Ketjen Black EC300J, manufactured by Lion Corporation) were added to 50 ml of 2-propanol (manufactured by Wako Pure Chemical Industries, Ltd.). Then, to this mixture, 2.84 g of an aqueous solution containing a proton conductive material (NAFION®, 0.142 g; or, rather, 5% NAFION® aqueous solution, manufactured by Wako Pure Chemical Industries, Ltd.) was added. The resultant solution was mixed using an ultrasonic wave dispersion machine (UT-106H, manufactured by Sharp Manufacturing Systems Corporation) for one hour. Thereby, a cathode ink (1) was prepared.

2-3. Fabrication of electrode having fuel cell catalyst layer

A gas diffusion layer (carbon paper TGP-H-060, manufactured by Toray Industries Inc.) was immersed in acetone for 30 seconds, degreased, and dried. Then, the gas diffusion layer was immersed in an aqueous 10% polytetrafluoroethylene (hereinafter also referred to as "PTFE") solution for 30 seconds. The immersed product was dried at room temperature, and then was heated at 350°C for one hour. Thereby, a water-repellent gas diffusion layer having PTFE dispersed in the carbon paper (hereinafter also referred to as "GDL") was obtained.

Next, the GDL described above was formed into the size of 5 cm × 5 cm, and the surface thereof was coated with the cathode ink (1) prepared in 2 above using an automatic spray-coating apparatus (manufactured by San-Ei Tech Ltd.) at 80°C. By repeating the spray-coating, an electrode having a cathode catalyst layer (1) in which the total amount of the fuel cell catalyst (2) and carbon black per unit area was 5 mg/cm$^2$ was fabricated.

2-4. Fabrication of membrane electrode assembly (hereinafter also referred to as "MEA")

NAFION membrane N-117 (manufactured by DuPont) was used as an electrolyte membrane. The electrode having the cathode catalyst layer (1) on the surface of the GDL, fabricated in 3 above, was used as a cathode. An electrode having the anode catalyst layer (1) on the surface of the GDL, fabricated in Reference Example 1, was used as an anode.

The MEA (1) in which the electrolyte membrane was interposed between the cathode and the anode was fabricated as described below.

First, the electrolyte membrane was heated at 80°C for one hour in a 3% hydrogen peroxide solution and then was heated at 80°C for one hour in pure water. Next, the electrolyte membrane was heated at 80°C for one hour in a 1M sulfuric acid aqueous solution and then was heated at 80°C for one hour in pure water.

An MEA (1) was fabricated by sandwiching the electrolyte membrane, from which moisture was removed, between the cathode and the anode and, in such a state, the cathode catalyst layer (1) and the anode catalyst layer (1) were thermally contact bonded using a hot pressing machine at 140°C at 3 MPa for 6 minutes so as to adhere to the electrolyte membrane.

2-5. Fabrication of single cell

A single cell (1) (25 cm$^2$) of a polymer electrolyte fuel cell was fabricated by sandwiching the MEA (1), fabricated in 2-4 above, between two sealing materials (gaskets), two separators each having a gas flow passage, two current collectors, and two rubber heaters, and fixing with a bolt such that the pressure of contacted surface would be a prescribed value (4N).

Evaluation of power generation property (measurement of catalytic performance)

Slope of the approximation formula of MEA (1) measurement number vs. the maximum power density was -0.27.

Example 2

Aside from adding 0.35 g of the fuel cell catalyst (1) to 350 mL of 1N sulfuric acid and then agitating for 144 hours while maintaining the temperature of the solution at 60°C, a fuel cell catalyst (3) was fabricated in the same manner described in "1. Preparation of fuel cell catalyst" in Example 1.

Dissolved metal content of the fuel cell catalyst (3) is shown in Table 1.

Next, aside from using the fuel cell catalyst (3) in place of the fuel cell catalyst (2), a single cell of a polymer electrolyte fuel cell (hereinafter referred to as "single cell (2)") was fabricated in the same manner described in Example 1. Note that an MEA that was used for fabricating the single cell (2) is referred to as "MEA (2)".

Evaluation of power generation property (measurement of catalytic performance)

Slope of the approximation formula of MEA (2) measurement number vs. the maximum power density was -0.50.

Example 3

1. Preparation of the fuel cell catalyst:

4 g (50 mmol) of titanium oxide ($TiO_2$), 1.5 g (125 mmol) of carbon black (XC-72, manufactured by Cabot Corporation), and 0.16 g (0.5 mmol) of lanthanum oxide ($La_2O_3$) were thoroughly mixed. 2.7 g of a titanium and lanthanum carbonitride (2) was obtained by heating the resultant mixture at 1,700°C for three hours in a nitrogen atmosphere. The obtained carbonitride (2) was a sintered body and, thus, was ground using a mortar.

1.18 g of a titanium and lanthanum oxycarbonitride (2) was obtained by heating 1.0 g of the obtained powdered carbonitride (2) at 900°C for four hours in a tubular furnace under a flow of a nitrogen gas comprising 1% by volume of oxygen gas and 1% by volume of hydrogen gas.

This titanium and lanthanum oxycarbonitride (2) was pulverized in the same manner described in "1. Preparation of fuel cell catalyst" in Example 1 in order to obtain a fuel cell catalyst (4) .

Thereafter, 0.35 g of the fuel cell catalyst (4) was added to 350 mL of 1N sulfuric acid and was agitated for 144 hours while maintaining the temperature of the solution at 30°C. Then, a fuel cell catalyst (5) was obtained by filtrating/separating by suction filtration, washing using distilled water and, thereafter, drying under vacuum for three hours at 60°C.

Dissolved metal content of the fuel cell catalyst (5) is shown in Table 1.

Next, aside from using the fuel cell catalyst (5) in place of the fuel cell catalyst (2), a single cell of a polymer electrolyte fuel cell (hereinafter referred to as "single cell (3)") was fabricated in the same manner described in Example 1. Note that an MEA that was used for fabricating the single cell (3) is referred to as "MEA (3)".

Evaluation of power generation property (measurement of catalytic performance)

Slope of the approximation formula of MEA (3) measurement number vs. the maximum power density was -0.84.

Example 4

1. Preparation of the fuel cell catalyst:

Aside from adding 0.35 g of the fuel cell catalyst (4) to 350 mL of 1N sulfuric acid and then agitating for 144 hours while maintaining the temperature of the solution at 60°C, a fuel cell catalyst (6) was fabricated in the same manner described in "1. Preparation of fuel cell catalyst" in Example 3.

Dissolved metal content of the fuel cell catalyst (6) is shown in Table 1.

Next, aside from using the fuel cell catalyst (6) in place of the fuel cell catalyst (2), a single cell of a polymer electrolyte fuel cell (hereinafter referred to as "single cell (4)") was fabricated in the same manner described in Example 1. Note that an MEA that was used for fabricating the single cell (4) is referred to as "MEA (4)".

Evaluation of power generation property (measurement of catalytic performance)

Slope of the approximation formula of MEA (4) measurement number vs. the maximum power density was -0.44.

Comparative Example 1

Next, aside from using the fuel cell catalyst (1) in place of the fuel cell catalyst (2), a single cell of a polymer electrolyte fuel cell (hereinafter referred to as "single cell (5)") was fabricated in the same manner described in Example 1. Note that an MEA that was used for fabricating the single cell (5) is referred to as "MEA (5)".

Evaluation of power generation property (measurement of catalytic performance)

Slope of the approximation formula of MEA (5) measurement number vs. the maximum power density was -1.6.

Comparative Example 2

Aside from using the fuel cell catalyst (4) in place of the fuel cell catalyst (2), a single cell of a polymer electrolyte fuel cell (hereinafter referred to as "single cell (6)") was fabricated in the same manner described in Example 1. Note that an MEA that was used for fabricating the single cell (6) is referred to as "MEA (6)".

Evaluation of power generation property (measurement of catalytic performance)

Slope of the approximation formula of MEA (6) measurement number vs. the maximum power density was -1.9.

Table 1: Dissolved metal content with respect to the prepared amount of metal oxycarbonitride

| | Dissolved metal content/ prepared amount (0.35 g)$\times$100(%) | | | |
|---|---|---|---|---|
| | Nb | Fe | Ti | La |
| Catalyst (2) | 0.07 | 0.85 | - | - |
| Catalyst (3) | 0.14 | 0.87 | - | - |
| Catalyst (5) | - | - | 9.0 | 0.66 |
| Catalyst (6) | - | - | 9.7 | 0.75 |

Table 2: Measurement number - slope of the approximation formula of the maximum power density

| | Slope |
|---|---|
| Catalyst (1) | -1.6 |
| Catalyst (2) | -0.27 |
| Catalyst (3) | -0.5 |
| Catalyst (4) | -1.9 |
| Catalyst (5) | -0.84 |
| Catalyst (6) | -0.44 |

## Claims

1. A method for producing a fuel cell catalyst containing a metal oxycarbonitride, the method comprising: a step of producing a metal oxycarbonitride by heating a metal carbonitride in an inert gas containing oxygen gas; and a step of bringing the metal oxycarbonitride into contact with an acidic solution; **characterized in that** the method additionally comprises, after the acid treatment, a step of (i) washing the metal oxycarbonitride or (ii) drying the metal oxycarbonitride or (iii) washing and then drying the oxycarbonitride.

2. The method according to claim 1, wherein the acidic solution is an aqueous solution of at least one type of acid selected from the group consisting of hydrogen chloride, sulfuric acid, citric acid, and acetic acid.

3. The method according to claim 1 or 2, wherein the contacting step is performed under the following conditions:

   Temperature: 15 to 100°C
   Time: 0.1 to 500 hours
   Acid concentration: 0.01 to 15 N.

4. A fuel cell catalyst produced via the production method according to any one of claims 1 to 3, **characterized in that** the metal oxycarbonitride at least comprises niobium or titanium.

5. The fuel cell catalyst according to claim 4, having not more than 15 % by mass of dissolved metal content as defined by the following formula:

```
Dissolved metal content= (mass of metal dissolved when
immersing the fuel cell catalyst in a 1N sulfuric acid aqueous
solution at 60°C for 150 hours)/(mass of fuel cell catalyst
before immersing)×100.
```

6. A fuel cell catalyst layer comprising the fuel cell catalyst according to claim 4 or 5.

7. The fuel cell catalyst layer according to claim 6, further comprising electron conductive particles.

8. An electrode comprising a fuel cell catalyst layer and a porous support layer, wherein the fuel cell catalyst layer is the fuel cell catalyst layer according to claim 6 or 7.

9. A membrane electrode assembly comprising a cathode, an anode and an electrolyte membrane interposed between the cathode and the anode, wherein the cathode and/or the anode is the electrode according to claim 8.

10. A fuel cell comprising the membrane electrode assembly according to claim 9.

11. A polymer electrolyte fuel cell comprising the membrane electrode assembly according to claim 9.


**Patentansprüche**

1. Verfahren zur Herstellung eines Brennstoffzellenkatalysators, der ein Metalloxycarbonitrid enthält, wobei das Verfahren umfasst: einen Schritt zur Herstellung eines Metalloxycarbonitrids durch Erwärmen eines Metallcarbonitrids in einem sauerstoffgashaltigen Inertgas; und
einen Schritt des Inkontaktbringens des Metalloxycarbonitrids mit einer sauren Lösung;
**dadurch gekennzeichnet, dass** das Verfahren zusätzlich nach der Säurebehandlung einen Schritt umfasst, bei dem (i) das Metalloxycarbonitrid gewaschen oder (ii) das Metalloxycarbonitrid getrocknet oder (iii) das Oxycarbonitrid gewaschen und anschließend getrocknet wird.

2. Verfahren nach Anspruch 1, worin die saure Lösung eine wässrige Lösung von mindestens einer Art von Säure ist, ausgewählt aus der Gruppe bestehend aus Chlorwasserstoff, Schwefelsäure, Zitronensäure und Essigsäure.

3. Verfahren nach Anspruch 1 oder 2, wobei der Kontaktierungsschritt unter den folgenden Bedingungen durchgeführt wird:

   Temperatur: 15 bis 100°C
   Zeit: 0,1 bis 500 Stunden
   Säurekonzentration: 0,01 bis 15 N.

4. Brennstoffzellenkatalysator, hergestellt nach dem Herstellungsverfahren nach einem der Ansprüche 1 bis 3, **dadurch gekennzeichnet, dass** das Metalloxycarbonitrid mindestens Niob oder Titan umfasst.

5. Brennstoffzellenkatalysator nach Anspruch 4 mit nicht mehr als 15 Masse-% gelöstem Metallgehalt, wie durch die folgende Formel definiert:

```
Gehalt an gelöstem Metall= (Masse des gelösten Metalls nach dem
Eintauchen des Brennstoffzellenkatalysators in eine wässrige 1N
Schwefelsäurelösung bei 60°C für 150 Stunden)/(Masse des
Brennstoffzellenkatalysators vor dem Eintauchen)×100.
```

6. Brennstoffzellenkatalysatorschicht, umfassend den Brennstoffzellenkatalysator nach Anspruch 4 oder 5.

7. Brennstoffzellenkatalysatorschicht nach Anspruch 6, die ferner elektronenleitende Partikel umfasst.

8. Elektrode, umfassend eine Brennstoffzellenkatalysatorschicht und eine poröse Trägerschicht, worin die Brennstoffzellenkatalysatorschicht die Brennstoffzellenkatalysatorschicht nach Anspruch 6 oder 7 ist.

9. Membranelektrodenanordnung, umfassend eine Kathode, eine Anode und eine Elektrolytmembran, die zwischen der Kathode und der Anode angeordnet sind, wobei die Kathode und/oder die Anode die Elektrode nach Anspruch 8 ist.

10. Brennstoffzelle, umfassend die Membranelektrodenanordnung nach Anspruch 9.

11. Polymerelektrolytbrennstoffzelle, umfassend die Membranelektrodenanordnung nach Anspruch 9.

**Revendications**

1. Procédé de production d'un catalyseur de pile à combustible contenant un oxycarbonitrure de métal, le procédé comprenant:

   une étape de production d'un oxycarbonitrure de métal en chauffant un carbonitrure de métal dans un gaz inerte contenant de l'oxygène gazeux; et
   une étape de mise en contact de l'oxycarbonitrure de métal avec une solution acide;
   **caractérisé en ce que** le procédé comprend en outre, après le traitement à l'acide, une étape (i) de lavage de l'oxycarboniture de métal, ou (ii) de séchage de l'oxycarbonitrure de métal, ou (iii) de lavage et ensuite de séchage de l'oxycarbonitrure.

2. Procédé selon la revendication 1, dans lequel la solution acide est une solution aqueuse d'au moins un type d'acide sélectionné dans le groupe comprenant le chlorure d'hydrogène, l'acide sulfurique, l'acide citrique et l'acide acétique.

3. Procédé selon la revendication 1 ou 2, dans lequel l'étape de mise en contact est exécutée sous les conditions suivantes:

   température: de 15°C à 100°C
   temps: de 0,1 heure à 500 heures
   concentration d'acide: de 0,01 N à 15 N.

4. Catalyseur de pile à combustible produit par l'intermédiaire du procédé de production selon l'une quelconque des revendications 1 à 3, **caractérisé en ce que** l'oxycarbonitrure de métal comprend au moins du niobium ou du titane.

5. Catalyseur de pile à combustible selon la revendication 4, ne présentant pas plus de 15 % en masse de teneur en métal dissous selon la formule suivante:

```
teneur en métal dissous = (masse de métal dissous lors
de l'immersion du catalyseur de pile à combustible dans
   une solution aqueuse 1N d'acide sulfurique à 60°C
  pendant 150 heures)/(masse de catalyseur de pile à
        combustible avant l'immersion) x 100.
```

6. Couche de catalyseur de pile à combustible comprenant le catalyseur de pile à combustible selon la revendication 4 ou 5.

7. Couche de catalyseur de pile à combustible selon la revendication 6, comprenant en outre des particules conductrices d'électrons.

8. Electrode comprenant une couche de catalyseur de pile à combustible et une couche de support poreuse, dans laquelle la couche de catalyseur de pile à combustible est la couche de catalyseur de pile à combustible selon la revendication 6 ou 7.

9. Ensemble d'électrode à membrane comprenant une cathode, une anode et une membrane électrolytique interposée entre la cathode et l'anode, dans lequel la cathode et/ou l'anode est l'électrode selon la revendication 8.

10. Pile à combustible comprenant l'ensemble d'électrode à membrane selon la revendication 9.

11. Pile à combustible à électrolyte polymère comprenant l'ensemble d'électrode à membrane selon la revendication 9.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009031383 A

- WO 2009107518 A